# EUROPEAN PATENT SPECIFICATION

(11) **EP 1 312 223 B1**
(45) Date of publication and mention of the grant of the patent: **28.09.2005**
(21) Application number: 01962693.6
(22) Date of filing: 30.05.2001
(51) Int. Cl.: H04N 9/28

(54) **CIRCUIT FOR CONVERGENCE SETTING IN A PROJECTION TELEVISION SET**
SCHALTUNG ZUR EINSTELLUNG DER KONVERGENZ BEI EINEM PROJEKTIONSFERNSEHGERÄT
CIRCUIT DE REGLAGE DE CONVERGENCE DANS UN TELEPROJECTEUR

(30) Priority: 05.06.2000 EP 00112069
(43) Date of publication of application: 21.05.2003
(73) Proprietor: Thomson Licensing S.A., 92100 Boulogne-Billancourt (FR)
(72) Inventor: RUNTZE, Albert, 78052 Villingen-Schwenningen (DE); GLEIM, Günter, 78052 Villingen-Schwenningen (DE); HEIZMANN, Friedrich, 78052 Villingen-Schwenningen (DE)
(74) Representative: Rossmanith, Manfred
(86) International application number: PCT/EP2001/006144
(87) International publication number: WO 2001/095638

(56) References cited:
- EP-A- 0 703 714
- US-A- 5 883 476

## Description

The invention is based on a circuit for convergence setting in a projection television set according to the preamble of Claim 1.

A projection television set contains three monochrome picture tubes for the primary colours red, green, blue, which each project a picture in its colour onto a screen. The three pictures are superimposed on the screen and together produce a colour picture. For satisfactory picture reproduction, the three pictures projected onto the screen must be brought exactly into congruence, i.e. converge. Additional deflection circuits and correction coils are used for convergence setting in horizontal and vertical direction for the colours red, green and blue. The correction currents for the convergence are deduced from correction values stored in a digital memory.

When such devices are manufactured, use is made of a large number of photo sensors inside or outside the visible picture area during convergence adjustment. The projected picture of each of the three tubes contains so-called markers in the form of monochrome red, green or blue picture locations. For satisfactory convergence, these markers in the projected picture must impinge exactly on the assigned sensor. This means that a manipulated variable, which indicates the two conceivable states "no light on the sensor" and "light on the sensor" has to be obtained from the output signal of each sensor.

From DE 199 39 344 it is known to arrange optical sensors outside the visible area of the picture screen. The sensors allow an automatic convergence adjustment, which can be initiated by the user upon pressing a key. The embodiment described in the reference is provided with eight sensors for this purpose, which are placed in the corners of the screen and in the middle of each border of the screen. Based on the electrical currents flowing in the convergence coils and being necessary to place a marker on a particular sensor corresponding convergence values are deduced and stored in a memory. To achieve a complete set of convergence values it is necessary to evaluate the measurement values of each optical sensor in an evaluation circuit. The required connections of the sensors with the evaluation circuit bring on additional expenses for the manufacturing of such a projection television receiver.

Therefore, it is desirable to provide a projection TV having the same performance at reduced production costs.

The invention suggests a projection television receiver having monochromatic picture tubes, the pictures of which are projected onto a screen and which are provided with deflection means, the television receiver further comprising a character generator for displaying symbols and characters on the screen, their position can be shifted on the screen under the influence of the deflection means, and a plurality of sensors being arranged in the non-visible area of the picture screen,
wherein the sensors are connected by a common single signal connection with a processing unit, and a single amplifier is used to amplify the output signals of all sensors,
wherein the processing unit comprises means for determining the local position of a displayed symbol generated by the character generator, and
wherein the processing unit comprises latches for counting coordinate values corresponding to the local position of the displayed symbol on the screen.

In one embodiment of the invention the processing unit is provided with a counter to distinguish between different frames of a television picture.

The invention is explained below using an exemplary embodiment with reference to the drawing. The drawing shows:
- Fig. 1: the fundamental structure of the projection television set,
- Figs. 2, 3: characteristic signals of the sensor and the evaluation
- Fig. 4: shows a simplified block diagram of the evaluation circuit,
- Fig. 5: the screen divided in small sections by the convergence cross hatch, and
- Fig. 6: a part of the internal circuitry of the convergence circuit.

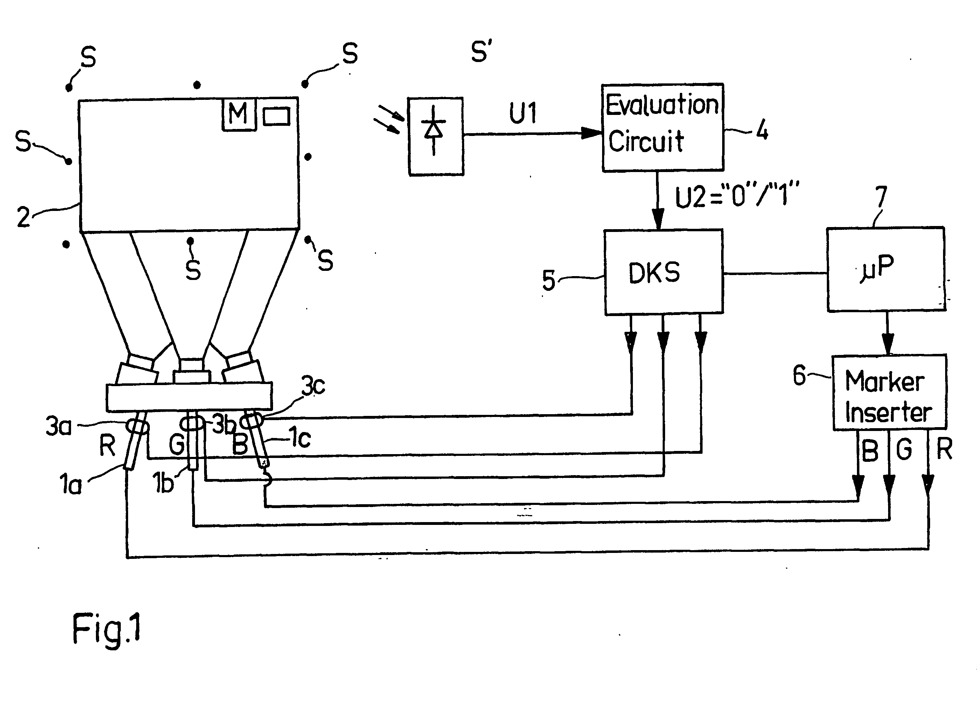

Fig. 1 shows the structure of a projection television set in a simplified form. Three monochrome picture tubes 1a, 1b, 1c project three pictures for the primary colours red, green and blue (R, G, B) onto the screen 2, where they are superposed in order to display a colour picture. For superposition of this type, the convergence of the three projected pictures must be correct, i.e. mutually corresponding parts of the three pictures must coincide at every point of the picture on the screen 2. In order to set the correct convergence, a plurality of stationary sensors S in the form of photodiodes are assigned to the screen 2 outside the visible picture area. The sensors S are indicated around the screen 2 only by dots. For the sake of simplicity, in the right part of the block diagram of Fig. 1 visualizing the signal flow, only one sensor S is shown. It is a representative for all eight sensors S shown on the left hand side of Fig. 1.

It is also possible to place the sensors S inside the visible picture area if this is advantageous or desirable for a certain embodiment.

The picture projected onto the screen 2 contains a respective marker M in the form of a monochrome, that is to say red, green or blue, picture location within a picture area that is black in the setting region of the marker M. For satisfactory convergence, the marker M must impinge sequentially on the sensors S. This impingement is detected by the fact that when the marker M sweeps over the sensor S, the latter emits an output signal U = "1" = "light" via an evaluation circuit. If the marker M is situated outside the sensor S, the sensor S emits the output signal U = "0" = "dark".

The marker M transmits light onto the sensor S, when sweeping over the sensor S. The output signal U1 of the sensor S is AC coupled with the detection circuit 4. The AC coupling eliminates from the output signal of the sensor a DC component generated by ambient light. The presence of a DC component could create a flawed evaluation of the sensor signals.

The evaluation circuit 4 derives from the signal U1, a binary output signal U2. If the marker M does not impinge on a sensor S, the output signal takes the value U2 = "0" = "no light or dark". If the marker M impinges on a sensor S, the output signal takes the value U2 = "1" = "light". The binary output signal U2 from the output of the circuit 4 passes to the digital convergence circuit (DKS) 5. The circuit 5 operates in such a way that digital values for the convergence are stored for the individual frames and are used for convergence setting during reproduction after digital to analogue conversion. Convergence coils 3a...3c attributed to each picture tube influence the electron beams of the picture tubes 1a...1c individually. In Fig.1 only one coil is shown for each picture tube. In a practical embodiment there are two coils for each tube for convergence adjustment in horizontal and vertical direction.

The control of the convergence circuit 5 and a marker inserter 6 is performed by a microprocessor 7 that is also utilized to control other functions of the projection TV.

Details of the light detection by the sensors and the processing of the sensor output signals are described in DE 197 02 452 and are not subject matter of the present invention.

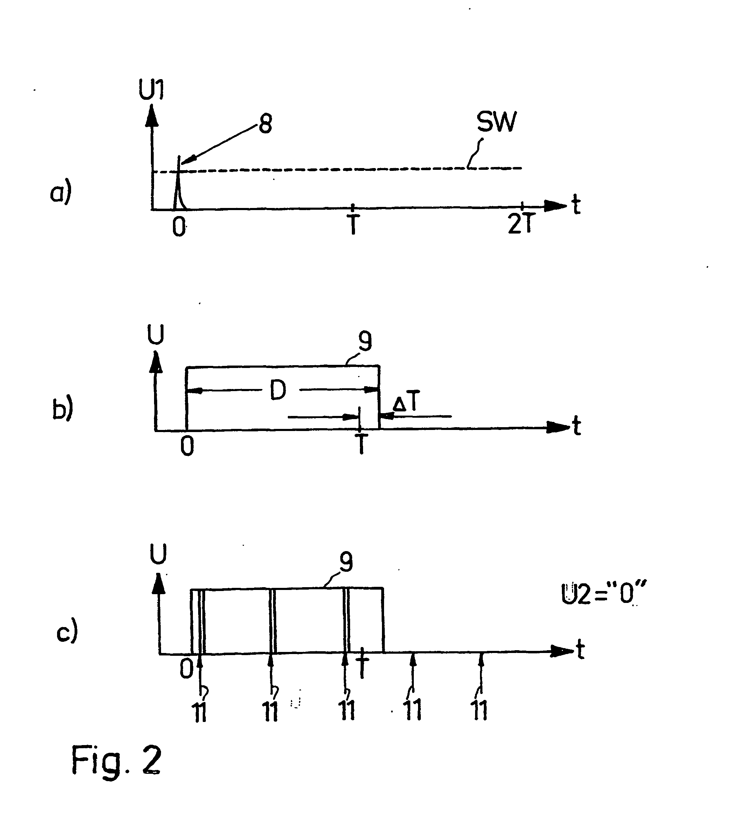

Fig. 2a to 2c show signal diagrams to explain the method of operation of the circuit for evaluating the output signal U1 of the sensor S for an interference pulse 8. The interference pulse 8 (Fig. 2a) passes to the input of the evaluation circuit 4 comprising a monostable circuit. On account of the pulse 8 the evaluation circuit 4 generates an output pulse 9 having a duration D, which is somewhat longer than the duration T of a frame as it is shown in Fig. 2b. According to Fig. 2c, the output signal 9 is sampled periodically, as the arrows 11 on the abscissa illustrate it. In this case, the monostable circuit supplies only three samples different from a zero value because the pulse U2 has ended at the fourth sampling. The evaluation circuit 4 is dimensioned in such a way that it responds only in the event of more than three samples having a value different from zero. The evaluation circuit 4 consequently suppresses the interference pulse 8 and generates an output signal U2 = "0", indicating that there is no light of a marker M on a sensor S.

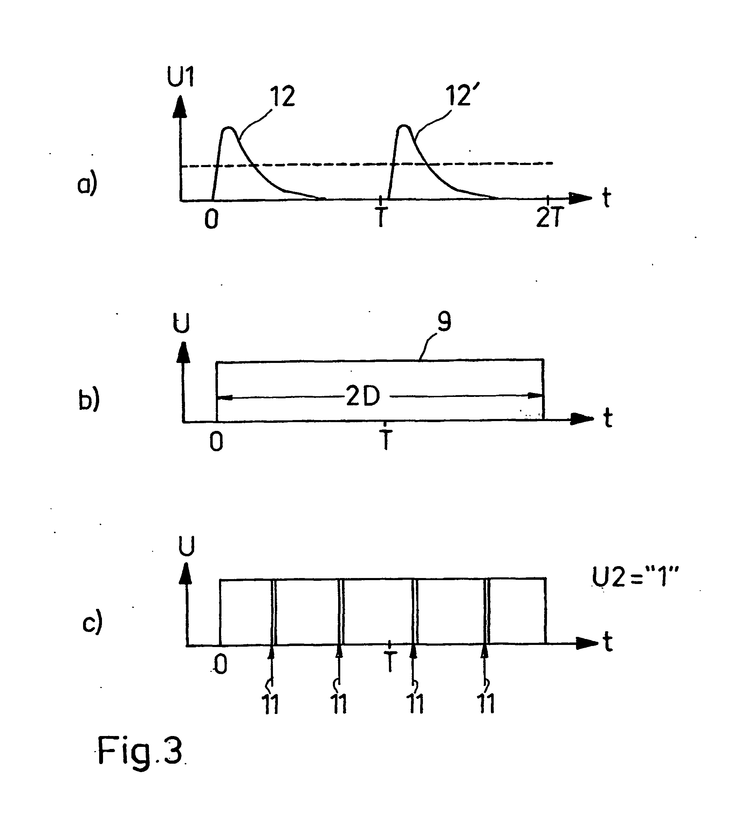

Figs. 3a to 3c show similar signal diagrams for the useful pulses 12 and 12', which are triggered by the impingement of the marker M on the sensor S and are therefore repeated with the period T of a frame. Before the output pulse 9 of the monostable circuit is reset after the duration D as in Fig. 2b, it is set anew by the second pulse 12'. Consequently, the duration of the output pulse 9 is now two times D, i.e. 2D as it is illustrated in Fig. 3b. The equidistant sampling indicated by the arrows 11 of the output pulse 9 according to Fig. 3c now supplies four samples having a value different from zero. In this case the evaluation circuit 4 outputs a signal U2 = "1" indicating that a marker M impinges on a sensor S. In this way the evaluation circuit 4 allows to discriminate between an interference pulse 8 and the useful pulses 12, 12'.

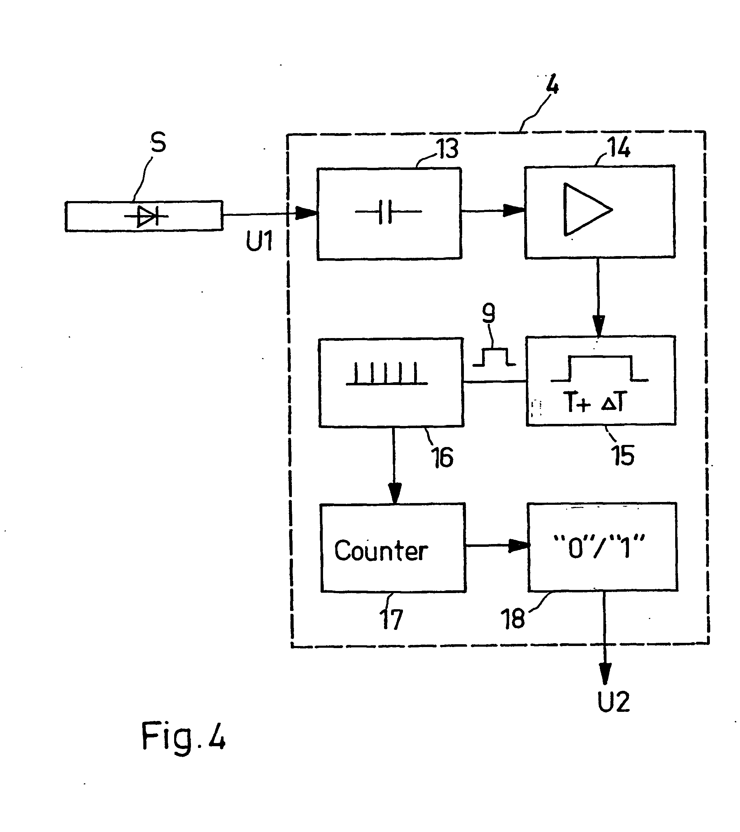

Fig. 4 illustrates a more detailed block diagram of the evaluation circuit 4. The DC component of the output signal U1 of a sensor S is removed in block 13 and only the AC component is further processed in an amplifier 14. Block 15 represents a monostable circuit having the toggle duration T + ΔT. The output pulse 9 of the monostable circuit 15 is sampled in the sampling circuit 16 as it is described above in connection with Figs. 2 and 3. A counter 17 counts the number of samples, which are different from a zero value. In block 18 it is decided if the result of counter 17 indicates that a marker impinges on a sensor or not and the output signal U2 is generated accordingly, i.e. U2 = "1" if the marker impinges on a sensor and U2 = "0" if not.

Also in Fig. 4 only one sensor S is shown for the sake of simplicity. However, the projection TV according to the invention is provided with eight photodiodes as sensors, which are connected in parallel. This configuration generates difficulties in regard of identifying, which one of the eight sensors is actually illuminated by the marker. The solution for this difficulty is described in the following.

Within the digital convergence system the picture is divided in small areas where independent correction values are applied. In order to output the correction values at the right time and synchronism to the horizontal and vertical deflection the convergence circuit is synchronized to the deflection. Internal counters for the horizontal and vertical direction are representing always the current place of the electron beam and the projected position on the screen 2, respectively. This general concept is described e.g. in EP-A 1 061 751. To implement an easy use of photo sensors for an optical loop system, which are simply connected in parallel to a common amplifier the digital convergence circuit S is provided with special circuitry. The general idea for position finding with a photo sensor is to move a monochrome marker towards a sensor and note the number of steps needed until the marker is lighted.

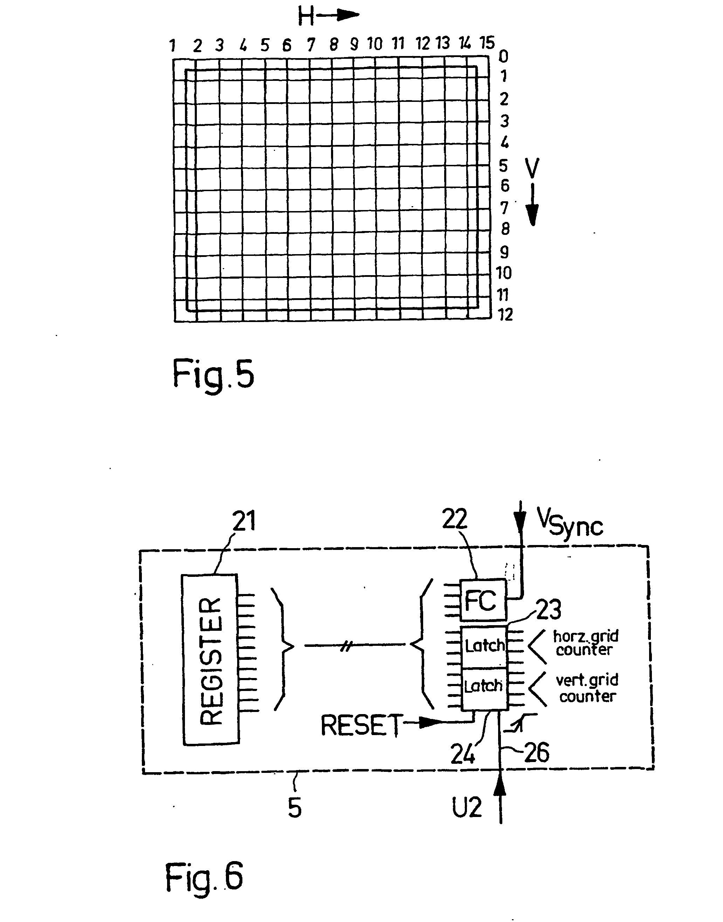

Fig. 5 shows the division of the screen 2 into small sections by the convergence cross hatch with the numbering of the grid lines indicated along the top and right border of the screen 2.

Fig. 6 illustrates in a schematic way details of the convergence circuit 5, which is realized e.g. as an integrated circuit. An example of such an integrated convergence circuit is the STV2050D supplied by ST electronics. Inside the convergence circuit there is a register 21 where the µP 7 can read if a marker has been detected by a sensor and if so, where. Four bit of the register 21 represent the status of a four bit rollover counter 22 (counting 0-15) which is clocked with the vertical sync signal Vsync applied to the convergence circuit 5. The rollover counter 22 is effective as a field counter. Furthermore, the register 21 contains the read out of two latches with four bit. The first four bit are associated with the horizontal grid counter. The second four bit are associated with the vertical grid counter. The output of the evaluation circuit 4 is connected to the latch input of these latches.

When the µP 7 reads the register 21 then the latches 23, 24 are reset to 1111 and the latch input is enabled. With a trigger at the latch input 26 caused by illumination of a sensor the present status of the grid counters is latched and the latch input 26 is disabled until the next read out of the register 21 has been performed by the µP 7.

When no trigger event has occurred, the readout of the register will be "1111" for the vertical grid counter state. Since the 1111 = 15 is a value, which is never reached by the vertical grid counter, the µP 7 decides that a marker M did not illuminate a sensor.

If a trigger event was present then the two latches will contain the counter values of the trigger moment. If the counter values are within a window around the position of the sensor where the marker is, then the correct sensor was illuminated. If the counter values are outside the window then the trigger was caused by any disturbance, e.g. a sequence of interference pulses.

The rollover counter enables the µP 7 to read out the register 21 without hardware synchronization to the vertical deflection frequency. If the µP 7 changes the position of the marker it waits at least one frame before the next result from the register 21 is read. In this way it is secured that the result is not originating from an illumination of a sensor before the position of the marker has been changed. By tracking, the value of the rollover counter 22 the µP 7 checks when one frame has passed.

A second advantage of this configuration is that the processing power has to be provided only when reading the register 21 containing the relevant data also using the latch register saves processing power because it is not needed to act immediately when a sensor output signal is detected.

## Claims

1. Projection television receiver having monochromatic picture tubes (1a, 1b, 1c), the pictures of which are projected onto a screen (2) and which are provided with deflection means, the television receiver further comprising a character generator (6) for displaying symbols and characters on the screen (2), their position can be shifted on the screen under the influence of the deflection means, and a plurality of sensors (S) being arranged in the non-visible area of the picture screen,
wherein the sensors are connected by a common single signal connection with a processing unit (4, 5), and a single amplifier (14) is used to amplify the output signals of all sensors (S),
wherein the processing unit (4, 5) comprises means (21, 22, 23, 24) for determining the local position of a displayed symbol generated by the character generator (6), and
wherein the processing unit (4, 5) comprises latches (23, 24) for counting coordinate values corresponding to the local position of the displayed symbol on the screen.

2. Projection television receiver according to claim 1, **characterized in that**, the processing unit (4, 5) is provided with a counter (22) to distinguish between different frames of a television picture.

## Patentansprüche

1. Projektionsfernsehgerät mit monochromatischen Bildröhren (1a, 1b, 1c), deren Bilder auf einen Bildschirm (2) projiziert werden und die mit Ablenkungsmitteln versehen sind, wobei das Fernsehgerät weiterhin einen Zeichengenerator (6) zur Anzeige von Symbolen und Buchstaben auf dem Bildschirm (2), deren Position auf dem Bildschirm unter dem Einfluß der Ablenkungsmittel verschiebbar ist, und eine Anzahl von Sensoren (S) umfasst, die in dem nicht sichtbaren Bereichs des Bildschirmes angeordnet sind,
wobei die Sensoren mittels einer einzigen gemeinsamen Signalverbindung mit einer Verarbeitungseinheit (4, 5) verbunden sind, und ein einziger Verstärker (14) verwendet wird, um die Ausgangssignale von allen Sensoren (S) zu verstärken,
wobei die Verarbeitungseinheit (4, 5) Mittel (21, 22, 23, 24) zur Bestimmung der örtlichen Position eines angezeigten Symbols umfasst, das von dem Zeichengenerator (6) erzeugt wird, und
wobei die Verarbeitungseinheit (4, 5) Latch-Schaltungen (23, 24) umfasst, um Koordinatenwerte zu zählen, die der örtlichen Position des auf dem Bildschirm angezeigten Symbols entspricht.

2. Projektionsfernsehgerät nach Anspruch 1, **dadurch gekennzeichnet, dass** die Verarbeitungseinheit (4, 5) einen Zähler (22) aufweist, um zwischen unterschiedlichen Halbbildern eines Fernsehbildes zu unterscheiden.

## Revendications

1. Récepteur de télévision à projection doté de tubes à image monochromatiques (1a, 1b, 1c), dont les images sont projetées sur un écran (2) et sont fournies avec des moyens de déflexion, le récepteur de télévision comprenant en outre un générateur de caractères (6) pour l'affichage de symboles et de caractères sur l'écran (2), leur position peut être décalée sur l'écran sous l'influence des moyens de déflexion, et une pluralité de capteurs (S) étant disposés dans la partie non visible de l'écran d'image,
dans lequel les capteurs sont connectés au moyen d'une connexion de signal unique commune avec une unité de traitement (4, 5), et un amplificateur unique (14) est utilisé pour amplifier les signaux de sortie de tous les capteurs (S),
dans lequel l'unité de traitement (4, 5) comprend des moyens (21, 22, 23, 24) permettant de déterminer la position locale d'un symbole affiché généré par le générateur de caractères (6), et
dans lequel l'unité de traitement (4, 5) comprend des verrous (23, 24) pour le comptage des valeurs de coordonnées correspondant à la position locale du symbole affiché à l'écran.

2. Récepteur de télévision à projection selon la revendication 1, **caractérisé en ce que**, l'unité de traitement (4, 5) est fournie avec un compteur (22) pour établir la distinction entre les différentes trames d'une image de télévision (S).
